# EUROPEAN PATENT APPLICATION

(11) **EP 2 530 733 A1**
(43) Date of publication of application: **05.12.2012**
(21) Application number: 11736926.4
(22) Date of filing: 21.01.2011
(51) Int. Cl.: H01L 31/042, H02G 15/04

(54) **TERMINAL BOX FOR SOLAR CELL MODULE, AND SOLAR CELL MODULE**

(30) Priority: 28.01.2010 JP 2010017204
(71) Applicant: Sanyo Electric Co., Ltd., Osaka 570-8677 (JP)
(72) Inventor: SASAKURA, Hiroyuki, Moriguchi-shi Osaka 570-8677 (JP)
(74) Representative: Glawe, Delfs, Moll
(86) International application number: PCT/JP2011/051050
(87) International publication number: WO 2011/093213

(57) **Abstract**

There is provided a terminal box for solar cell module, capable of ensuring waterproofing capability and insulating capability without requiring separate members such as packings. The terminal box includes: a box main body 31 to be attached to a solar cell module; a plurality of connection terminals 33a ... arranged inside the box main body 31 for connection to a plurality of end ribbons from solar cells in the solar cell module; external-connection cables 17 each having an end which is connected to a corresponding one of the connection terminals 33a, and another end which is pulled out of the box main body 31; and cable through-holes for routing the external-connection cables 17 into the box main body 31. The box main body 31 has resin pockets 37a for a filler resin, at regions where the cables 17 are inserted.

## Description

### Technical Field

The present invention relates to a terminal box for solar cell module to be attached to a solar cell module for connecting the module with another solar cell module. The invention also relates to a solar cell module using the terminal box.

### Background Art

Solar power generation systems are gathering attention in recent years as environmentally friendly power generation systems, from increasing awareness in environmental issues. One form of such solar power generation systems is a solar-light power-generation system which uses solar cell modules installed in a matrix pattern on a roof of a building for example. In such a solar power generation system, each solar cell module has a terminal box attached thereto, in order to provide electrical connection to adjacent solar cell modules as well as to extract electrical power which is generated by each solar cell module (see Patent Literature 1).

The terminal box for solar cell module includes a box main body which has a plurality of terminals inside the box main body, for electrical connection to output terminals of the solar cell modules. Each of these terminals is electrically connected to an end of an external-connection cable, with the other end of the cable being connected to a cable from another terminal box for solar cell module for example.

In the above-described conventional terminal box for solar cell module, insulating resin such as silicone resin is used as a sealing resin to fill inside of the box main body to ensure waterproofing capability and insulating capability of the terminal box for solar cell module.

### Citation List

### Patent Literature

[Patent Literature 1] JP-A 2001-77391 Gazette

### Summary of Invention

### Technical Problem

The above-described external-connection cables have an outer coat which is made of insulating resin such as cross-linked polyethylene. However, the outer coat of the external-connection cable and silicone resin, for example, are not bonded strongly enough to each other and further, small gaps between the cable and the surrounds are not filled completely with silicone resin. Therefore, the terminal box cannot maintain its waterproofing function to a sufficient level, and the terminal box is subject to such troubles as water finding its way into the terminal box.

In order to prevent the water troubles, members such as packings and O rings are sometimes attached to the cable. However, these solutions have problems, including that it requires separate members such as packings; that it requires additional steps of assembly; and that it increases cost.

An object of the present invention is to provide a terminal box for solar cell module capable of ensuring waterproofing capability and insulating capability without requiring separate members such as packings.

### Solution to Problem

The present invention provides a terminal box for a solar cell module, which includes: a box main body to be attached to the solar cell module; a plurality of connection terminals arranged inside the box main body for connection to a plurality of end ribbons from solar cells in the solar cell module; external-connection cables each having an end which is connected to a corresponding one of the connection terminals and another end which is drawn out of the box main body; and cable through-holes in the box main body for routing the external-connection cables into the box main body. With this arrangement, the box main body has a resin pocket for a filler resin, at a region where the external-connection cable is inserted.

The resin pocket may be made inside the cable through-hole.

Also, the resin pocket may be made near a connection area between the cable through-hole and an inside of the box main body.

A solar cell module according to the present invention includes: a front surface member; a rear surface member; a plurality of solar cells disposed between the front surface member and the rear surface member; a sealing member sealing the solar cells between the front surface member and the rear surface member; and the-above described terminal box for solar cell module, attached to the rear surface member.

### Advantageous Effects of Invention

The present invention includes a resin pocket for a filler resin, at a region where the external-connection cable is inserted. This ensures that the filler resin fills completely, thereby preventing water, for example, from finding its way into the through-hole.

### Brief Description of Drawings

Fig. 1 is a plan view which shows a solar cell module with a terminal box according to the present invention attached thereto.
Fig. 2 is a plan view which shows a primary portion of a solar cell panel to which the terminal box according to the present invention is attached.
Fig. 3 is a side view of a terminal box for solar cell module according to a first embodiment of the present invention, with half of the side shown in a sectional view.
Fig. 4 is a plan view of the terminal box for solar cell module according to the first embodiment of the present invention, showing a state where its lid portion is removed, with part of a cable through-hole shown in a sectional view.
Fig. 5 is a side view of a terminal box for solar cell module according to a second embodiment of the present invention, with half of the side shown in a sectional view.
Fig. 6 is a side view of a variation of the terminal box for solar cell module according to the second embodiment of the present invention, with half of the side shown in a sectional view.
Fig. 7 is a side view of a terminal box for solar cell modules according to a third embodiment of the present invention, with half of the side shown in a section.
Fig. 8 is a plan view of the terminal box for solar cell module according to the third embodiment of the present invention, showing a state where its lid portion is removed.

### Description of Embodiments

Embodiments of the present invention will be described in detail with reference to the drawings. It should be noted here that throughout the drawings the same or equivalent parts and components will be indicated with the same reference symbols, and in order to avoid redundancy in description, their description will not be repeated.

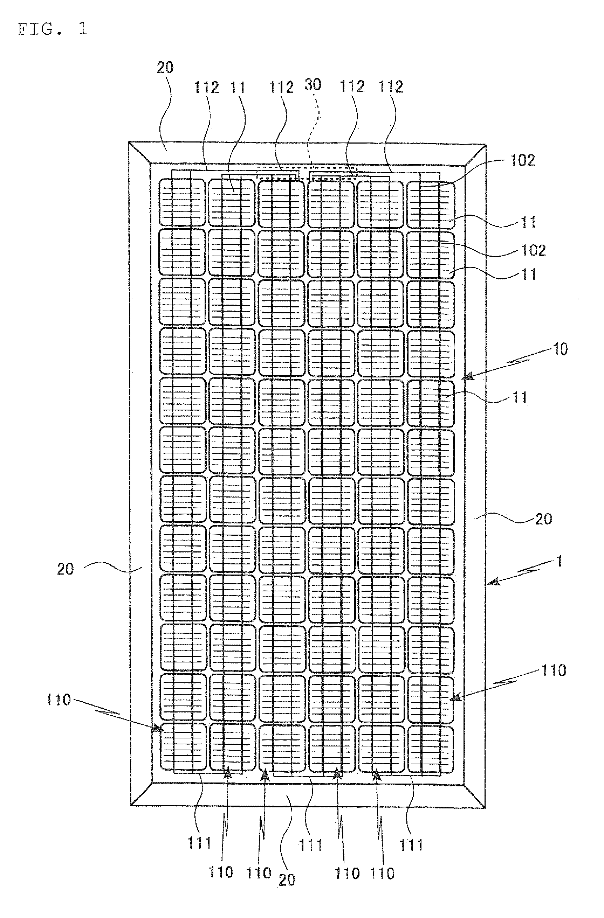

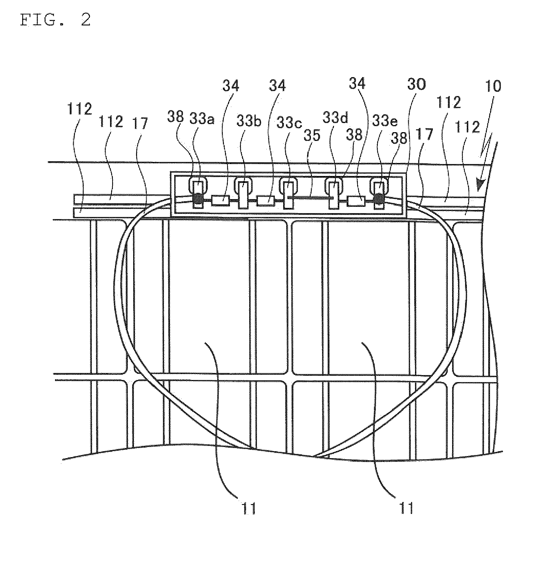

First, a solar cell module to which a terminal box according to the present invention is attached will be described with reference to Fig. 1 and Fig. 2. Fig. 1 is a plan view which shows a solar cell module with a terminal box according to the present invention attached thereto. Fig. 2 is a plan view which shows a primary portion of a solar cell panel to which the terminal box according to the present invention is attached.

A solar cell module 1 to which a terminal box according to the present invention is attached includes a solar cell panel 10 which has a plurality of solar cells 11 ... therein; and a frame 20 attached therearound. Each solar cell 11 is made of crystalline semiconductors provided by monocrystal silicon and polycrystal silicon having a thickness of 0.15 mm for example in a substantially square shape having a side of 100 mm approx. However, the present invention is not limited to this, and the solar cells may be of a different type.

The solar cell 11 has, for example, an n-type region and p-type region formed therein. A junction is formed in the interface between the n-type region and the p-type region, for formation of an electric field to separate carriers. The solar cell used in this embodiment may have an arrangement, for example, that a substantially intrinsic amorphous silicon layer is placed between a monocrystal silicon substrate and an amorphous silicon layer for reduced defect in the interface therebetween and improved characteristics of a hetero junction interface.

Each of these solar cells 11 is electrically connected with the adjacent solar cells 11 with ribbons 102 which are made of flat copper foils for example. Specifically, each ribbon has its first-end side connected to an upper surface side electrode of a certain solar cell 11 while its second-end side is connected to a lower surface side electrode of another solar cell 11 adjoining the certain solar cell. These solar cells 11 ... are connected in series by the ribbons 102, to form a string 110, and these strings 110, 110 are connected with each other by bus ribbons 111. Also, the strings 110 are connected to end ribbons 112, so that a predetermined level of output, of 200 Watts for example, is drawn from the solar cell module 1 via the end ribbons 112. Also, the solar cell panel 10 includes a plurality of solar cells 11 sealed between a transparent front surface member such as glass or transparent plastic and a rear surface member which is provided by a weather resistant film as a weather resistance member, made by sandwiching a metal foil on the rear side between insulating films, or a transparent member such as glass or transparent plastic, using a sealing member 14 which has good weather resistance and moisture resistance such as EVA (ethylene vinyl acetate).

As shown in Fig. 1 and Fig. 2, the terminal box 30 is attached to the rear surface member, near the frame 20 of the solar cell panel 10, using an adhesive or the like.

Fig. 2 shows the terminal box 30 in a simplified manner without details of the terminals, etc. The terminal box 30 includes a box main body 31 having therein connection terminals 33a through 33e provided correspondingly to the end ribbons from the solar cell panel 10. Correspondingly to these connection terminals 33a through 33e, ribbon holes 38 ... are formed in a bottom of the box main body 31 for insertion of the end ribbons. Also, through-holes (unillustrated) are formed on two side surfaces of the box main body 31 for insertion of external-connection cables 17.

In the embodiment in Fig. 2, five connection terminals are provided for four end ribbons 112 .... In this embodiment, the end ribbons are not connected to the connection terminals 33c, so the connection terminals 33c and the connection terminals 33d are connected with each other with a jumper wire 35. A bypass diode 34 is connected at each of the following places; across the connection terminals 33a and 33b, across the connection terminals 33a and 33b, and across the connection terminals 33d and 33e.

With the above, connection between the terminal box 30 and the end ribbons 112 from the solar cell panel 10 is made as follows: Through the ribbon holes 38 ..., the end ribbons 112 ...are introduced inside, and each of the end ribbons 112 ...is soldered to one of the connection terminals 33a, 33b, 33d, 33e. Then, the cables 17 inserted into the connection terminal 33a via the through-holes are rigidly fixed by cable swaging for example. Likewise, the cables 17 inserted into the connection terminal 33e via the through-hole are rigidly fixed by cable swaging for example.

Following these steps, the end ribbons 112 from the solar cell panel 10 are connected in series by using the terminal box 30, so that a cable 17 for a positive terminal and a cable 17 for a negative terminal are drawn out of the terminal box 30.

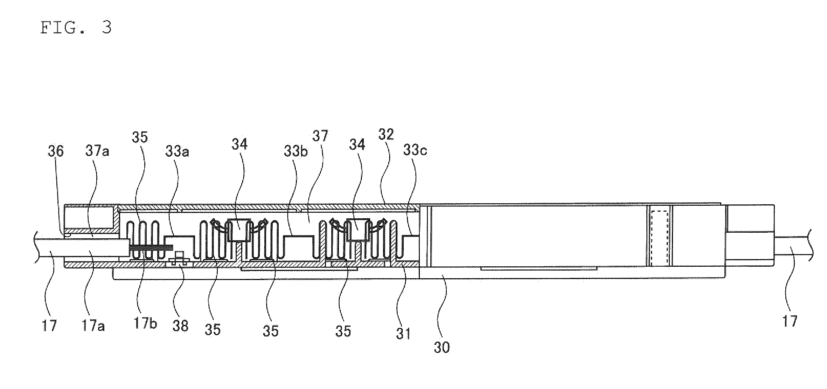

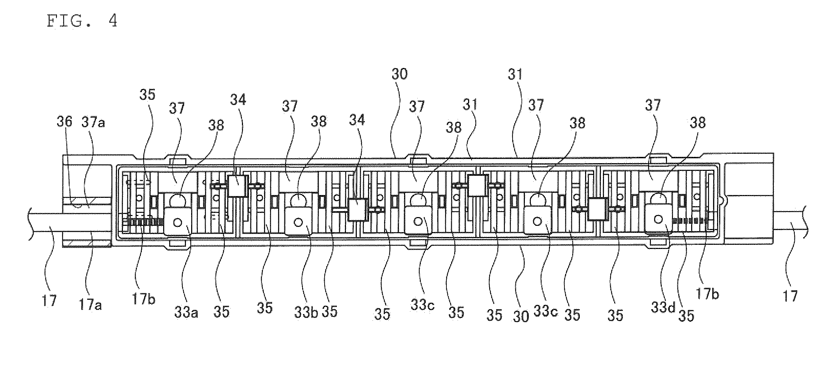

Next, a terminal box for solar cell module according to a first embodiment of the present invention will be described with reference to Fig. 3 and Fig. 4. Fig. 3 is a side view of a terminal box for solar cell module according to the first embodiment of the present invention, with half of the side shown in a sectional view whereas Fig. 4 is a plan view of the terminal box, showing a state where its lid portion is removed, with part of a cable through-hole shown as a sectional view.

Like the example described thus far, this terminal box 30 for solar cell module according to the first embodiment is attached to a rear surface of a solar cell panel 10 which includes a plurality of solar cells connected electrically in series.

The terminal box 30 is made of a synthetic resin by molding for example, and includes a box main body 31 which has a holding recess 37 inside itself, and a platy lid member 32 which closes the holding recess 37. The box main body 31 is structured as a rectangular case with its upper surface open to the outside. The lid member 32 is attached on the upper surface side of the box main body 31.

The terminal box 30 is attached by bonding the lower surface of the box main body 31 to the rear surface member of the solar cell panel 10 by using an adhesive. Also, for purposes of waterproofing, moisture prevention, heat dissipation, water condensation prevention, etc. , silicone resin is used to fill the holding recess 37 as a filler resin, and then the lid member 32 is fitted securely.

The box main body 31 has a bottom formed with the ribbon holes 38 through which the end ribbons from the solar cell panel 10 are inserted. Also, cable through-holes 36 are formed on left and right ends of the box main body 31 for insertion of external-connection cables 17.

Also, connection terminals 33a through 33e are erected side by side in the left-right direction from the bottom surface, correspondingly to the ribbon holes 38, between the cable through-hole 36, 36 in the box main body 31. In this embodiment, connection of the cables 17 are made by, first, fitting core wire portions 17b of the cables 17 into connection portions of the respective left and right connection terminals 33a, 33e and then tightly fixing the portions.

With the above, edge portions of the plural end ribbons from the solar cell panel 10 are inserted into the box main body 31 through the ribbon holes 38, and then soldered to edge portions of the respective connection terminals 33a through 33e.

Also, between mutually adjacent connection terminals 33a through 33e, metal heat dissipation plates 35 ... are formed so as to connect with the connection terminals. Bypass diodes 34 each working as a rectifier for a bypass are disposed across two metal heat dissipation plates 35. These bypass diodes 34 are connected across the connection terminal.

Heat generated in the bypass diodes 34 is dissipated through the heat dissipation plates 35, so the arrangement can effectively prevent localized hot spots. The heat dissipation plates 35 provide heat removal from increased area, achieving improvement in heat dissipation capabilities. This improves durability of the bypass diodes 34, etc., offering an advantage of improved long term reliability of the bypass diodes 34, and of the solar cell module in this regard.

The cables 17 are inserted through the through-holes 36 and then into the box main body 31. Then, the cables 17 are fixed to the box main body 31 of the terminal box 30 with unillustrated cable fasteners.

The cables 17 have an outer coat 17a made of cross-linked polyethylene, for example. Cross-linked polyethylene does not provide good bonding to silicone resin and in addition does not easily find its way into narrow gaps. To improve on these, silicone pockets 37a are provided inside the through-holes 36 in the present embodiment to ensure that silicone resin will fill sufficiently. Specifically, in this first embodiment, the through-holes 36 are given a sufficiently larger inner diameter than an outer diameter of the cables 17, to form the silicone pockets 37a so that silicone resin will flow from the holding recess 37 of the box main body 31 and fill the space.

With this arrangement, the core wire portions 17a of the cables 17 are first connected two the connection terminals 33a (33e)). Subsequently, the holding recess 37 of the box main body 31 is filled with silicone resin. The silicone resin flows between the through-hole 36 and the outer coat 17a of the cable 17, and fills the silicone pockets 37a sufficiently. As a result, gaps between the through-hole 36 and the cable 17 are filled with silicone resin, reliably preventing entry of water etc. from the through-holes 36.

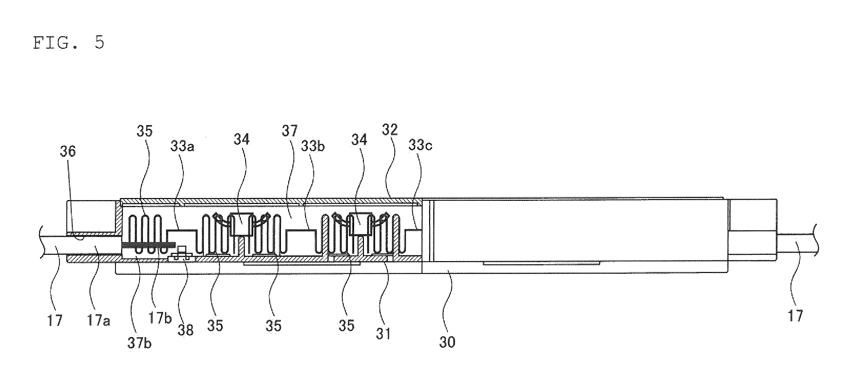

Next, a second embodiment of the present invention will be described with reference to Fig. 5. Fig. 5 is a side view of a terminal box for solar cell module according to the second embodiment of the present invention, with half of the side shown in a sectional view. It should be noted here that the same or equivalent parts and components as in the first embodiment will be indicated with the same reference symbols, and in order two avoid redundancy, their description will not be repeated hereafter.

While the silicone pocket 37a is formed inside the through-hole 36 according to the first embodiment, a silicone pocket 37b in the second embodiment is formed near the connection area between the through-hole 36 for the cable 17 and inside (the holding recess 37) of the box main body 31. The silicone pocket 37b is formed by enlarging a lower region of the box main body 31 which faces the through-hole 36 of the box main body 31. The silicone pocket 37b ensures that the inside space of the box main body 31 facing the through-whole 36 is sufficiently filled with silicone resin. Since silicon resin reliably fills the spaces where the cables 17 are inserted into the box main body 31, the arrangement reliably prevents water which happens to find its way from any gap between the through-holes 36 and the cables 17, by the silicone resin which completely fills up the silicone pocket 37b.

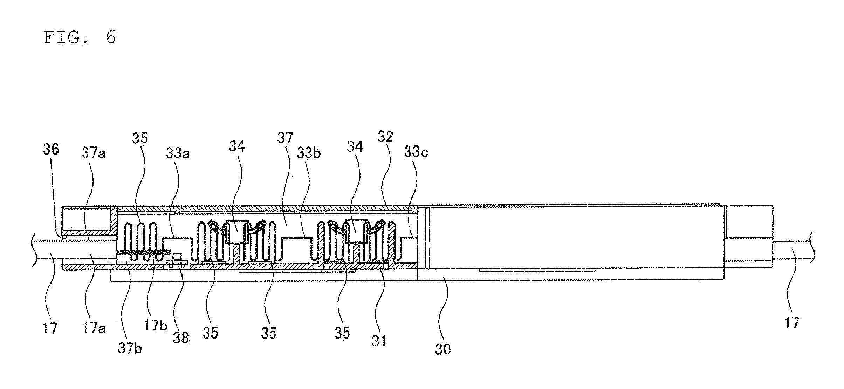

It should be noted here that in the second embodiment described above, the through-hole 36 has a slightly greater inner diameter than an outer diameter of the cables 17. However, as shown in a variation of the second embodiment in Fig. 6, a silicone pocket 17a may be provided inside the through-hole 36. The combination of the silicone pocket 37a inside the through-hole 36 and the silicone pocket 37b inside the box main body 31 enhances waterproofing capability.

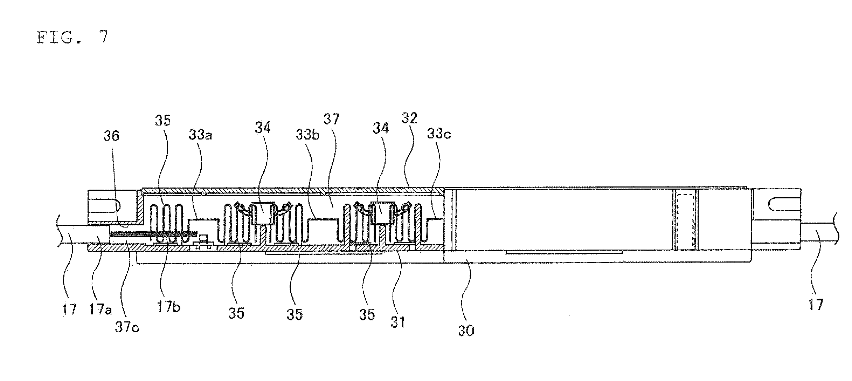

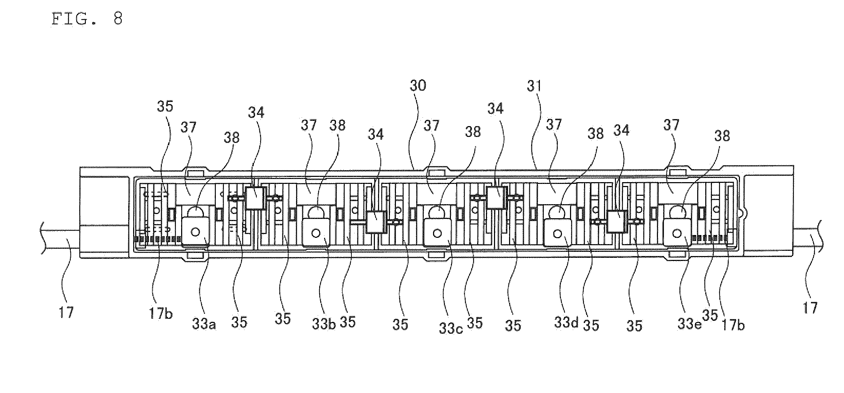

Next, a third embodiment of the present invention will be described with reference to Fig. 7 and Fig. 8. Fig. 7 is a side view of a terminal box for solar cell module according to the third embodiment of the present invention, with half of the side shown in a sectional view. Fig. 8 is a plan view of the terminal box, showing a state where its lid portion is removed, with part of a cable through-hole shown in a sectional view. The same or equivalent parts and components as in the first embodiment will be indicated with the same reference symbols, and in order to avoid redundancy, their description will not be repeated hereafter.

While the silicone pocket 37a in the first embodiment is formed inside the through-hole 36 by enlarging the inner diameter of the through-hole 36, the third embodiment uses an arrangement where the core wire portion 17b of the cable 17 comes inside the through-hole 36, and a silicone pocket 37c is formed between the core wire portion 17b of the cable 17 and an inner wall of the through-hole 36. In this third embodiment, the core wire portion 17b of the cable 17 makes contact with silicone resin inside the through-hole 36. Bonding strength between the core wire portion 17b and silicone resin is better than that between the outer coat 17a of the cable 17 and silicone resin, and therefore the arrangement provides more improved waterproofing capability than the first and the second embodiments.

It should be noted here that the quantity of the bypass diodes disposed, or the quantity and shape of the terminals disposed in each embodiment described thus far may be determined as appropriate. These do not limit any of the embodiments.

All of the embodiments disclosed herein are to show examples, and should not be considered as of a limiting nature in any way. For example, the present invention is also applicable to thin-film solar cell modules. The scope of the present invention is identified by the claims and is not by the descriptions of the embodiments given hereabove, and it is intended that the scope includes all changes falling within equivalents in the meaning and extent of the Claims.

### Reference Signs List

- 30: terminal box
- 31: box main body
- 32: lid portion
- 33a: through 33e connection terminals
- 36: through-hole
- 37: holding recess
- 37a, 37b, 37c: silicone pocket
- 17: cable
- 17a: outer coat
- 17b: core wire portion

## Claims

1. A terminal box for a solar cell module, comprising:
a box main body to be attached to the solar cell module;
a plurality of connection terminals arranged inside the box main body for connection to a plurality of end ribbons from solar cells in the solar cell module;
external-connection cables each having an end which is connected to a corresponding one of the connection terminals and another end which is drawn out of the box main body; and
cable through-holes in the box main body for routing the external-connection cables into the box main body;
wherein the box main body has a resin pocket for a filler resin, at a region where the external-connection cable is inserted.

2. The terminal box for solar cell module according to Claim 1, wherein the box main body has a holding recess inside thereof, the terminal box further comprising a lid member for closing the holding recess, the holding recess being filled with a silicone resin serving as the filler resin.

3. The terminal box for solar cell module according to Claim 2, wherein the resin pocket is inside the cable through-hole.

4. The terminal box for solar cell module according to Claim 2 or Claim 3, wherein the resin pocket is near a connection area between the cable through-hole and an inside of the box main body.

5. A solar cell module comprising a front surface member; a rear surface member; a plurality of solar cells disposed between the front surface member and the rear surface member; a sealing member sealing the solar cells between the front surface member and the rear surface member; and a terminal box for the solar cell module attached to the rear surface member; wherein
the terminal box for solar cell module includes:
a box main body to be attached to the solar cell module;
a plurality of connection terminals arranged inside the box main body for connection to a plurality of end ribbons from solar cells in the solar cell module;
external-connection cables each having an end which is connected to a corresponding one of the connection terminals, and another end which is drawn out of the box main body; and
cable through-holes in the box main body for routing the external-connection cables into the box main body;
wherein the box main body has a resin pocket for a filler resin, at a region where the external-connection cable is inserted.

6. The solar cell module according to Claim 5, wherein the box main body has a holding recess inside thereof, the terminal box further comprising a lid member for closing the holding recess, the holding recess being filled with a silicone resin serving as the filler resin.

7. The solar cell module according to Claim 6, wherein the resin pocket is inside the cable through-hole.

8. The solar cell module according to Claim 6 or Claim 7, wherein the resin pocket is near a connection area between the cable through-hole and an inside of the box main body.
